# EUROPEAN PATENT APPLICATION

(11) **EP 4 803 300 A1**
(43) Date of publication of application: **09.09.2026**
(21) Application number: 24886113.0
(22) Date of filing: 22.10.2024
(51) Int. Cl.: B32B 9/00, B32B 18/00, C04B 35/584, C04B 35/583, C04B 35/64, B28B 1/16, B28B 11/10, B28B 11/24

(54) **GREEN SHEET, METHOD OF MANUFACTURING SILICON NITRIDE SUBSTRATE WITH REDUCED WARPAGE, AND SILICON NITRIDE SUBSTRATE MANUFACTURED THEREBY**

(30) Priority: 31.10.2023 KR 20230148548
(71) Applicant: OCI Company Ltd., Seoul 04532 (KR)
(72) Inventor: KIM, Taehong, Seongnam-si Gyeonggi-do 13212 (KR)
(74) Representative: Winter, Brandl - Partnerschaft mbB
(86) International application number: PCT/KR2024/016079
(87) International publication number: WO 2025/095438

(57) **Abstract**

The present invention relates to a green sheet, a method of manufacturing a silicon nitride substrate with reduced warpage, and a silicon nitride substrate manufactured thereby, and provides a green sheet comprising a silicon nitride sheet layer and a boron nitride sheet layer laminated on one or both surfaces of the silicon nitride sheet layer.

## Description

### [Technical Field]

The present disclosure relates to a green sheet, a method of manufacturing a silicon nitride substrate with reduced warpage, and a silicon nitride substrate manufactured thereby.

### [Background Art]

Recently, the use of high-power electronic circuit boards, such as power modules for electric vehicles and inverters for wind and solar power generation, has increased, and insulating ceramic substrates have been used for the implementation of these circuit boards. Among insulating ceramic substrates, silicon nitride sintered substrates have excellent mechanical strength, and thus, their use as insulating substrates for power modules in electric vehicles has rapidly increased.

### [Disclosure]

### [Technical Problem]

An object of the present disclosure is to provide a green sheet capable of manufacturing a ceramic sintered substrate with excellent flatness.

Another object of the present disclosure is to provide a method of manufacturing a silicon nitride substrate capable of achieving excellent flatness by reducing warpage.

Yet another object of the present disclosure is to provide a silicon nitride substrate capable of improving bonding strength with a metal thin film by reducing warpage to achieve excellent flatness.

The objects of the present disclosure are not limited to those mentioned above, and other objects and advantages of the present disclosure not mentioned will be understood from the following description and will be more clearly understood from the embodiments of the present disclosure. In addition, it will be readily apparent that the objects and advantages of the present disclosure may be realized by means and combinations thereof set forth in the claims.

### [Technical Solution]

In an embodiment of the present disclosure, there is provided a green sheet comprising a silicon nitride sheet layer and a boron nitride sheet layer laminated on one or both surfaces of the silicon nitride sheet layer.

The silicon nitride sheet layer and the boron nitride sheet layer may be compressed.

The silicon nitride sheet layer comprises at least one silicon nitride sheet, and when the silicon nitride sheet layer comprises a plurality of silicon nitride sheets, the plurality of silicon nitride sheets may be compressed.

The boron nitride sheet layer may comprise a biaxially oriented boron nitride sheet.

The boron nitride sheet layer may comprise a boron nitride sheet having a thickness of 10 µm to 20 µm.

In an embodiment of the present disclosure,
there is provided a method of manufacturing a silicon nitride substrate with reduced warpage, the method comprising:
interposing at least one green sheet between an upper plate and a lower plate;
performing a debinding process on the green sheet;
performing a sintering process on the green sheet; and
obtaining a silicon nitride substrate from the green sheet.

In the method, the green sheet may be formed by compressing the silicon nitride sheet layer and the boron nitride sheet layer.

In the method, the silicon nitride sheet layer in the green sheet may be subjected to constrained sintering by the boron nitride sheet layer.

In the method, the number of green sheets interposed between the upper plate and the lower plate may be one or plural.

In the method, the silicon nitride sheet layer comprises at least one silicon nitride sheet, and when the silicon nitride sheet layer comprises a plurality of silicon nitride sheets, the plurality of silicon nitride sheets may be compressed.

In the method, the boron nitride sheet layer may be formed by compressing a plurality of boron nitride sheets, each having a thickness of 10 µm to 20 µm.

In the method, the silicon nitride sheet may be formed into a sheet from silicon nitride powder by tape casting.

The sintering process may comprise:
raising a temperature;
maintaining a predetermined temperature; and
cooling the green sheet.

The cooling may be performed by leaving the green sheet, without separately performing a process of controlling a cooling temperature or a cooling rate.

In an embodiment of the present disclosure, there is provided a silicon nitride substrate manufactured by the method of manufacturing a silicon nitride substrate with reduced warpage, wherein a calculated value of ΔZ/L (mm/mm) is 0.002 or less, where ΔZ/L is a ratio of ΔZ to L, L is a diagonal length (mm) of the silicon nitride substrate manufactured in a rectangular shape, measured by scanning with a non-contact three-dimensional measuring instrument, and ΔZ is a difference (mm) between a lowest point and a highest point on one surface of the silicon nitride substrate, measured in a vertical direction from a sample holder.

The silicon nitride substrate may comprise a sintered silicon nitride sheet layer and a sintered boron nitride sheet layer, wherein the sintered boron nitride sheet layer may have a thickness of 10 µm to 20 µm.

The silicon nitride substrate may be formed by constrained sintering of a compressed silicon nitride sheet layer and boron nitride sheet layer.

The silicon nitride substrate comprises a sintered boron nitride sheet layer, wherein the sintered boron nitride sheet layer may have a thickness of 10 µm to 20 µm.

### [Advantageous Effects]

According to the present disclosure, a silicon nitride substrate capable of manufacturing a circuit board with reduced warpage and excellent flatness during metal thin film bonding, may be manufactured.

In addition to the effects described above, specific effects of the present disclosure will be described together with the following description of specific details for implementing the present disclosure.

### [Description of Drawings]

FIG. 1 is a cross-sectional view of a green sheet according to an embodiment.
FIG. 2 is a cross-sectional view of a green sheet according to another embodiment.
FIG. 3 is a schematic diagram showing a silicon nitride sheet layer in a green sheet according to an embodiment.
FIG. 4 is a schematic diagram showing a green sheet according to an embodiment formed by laminating a boron nitride sheet layer and the silicon nitride sheet layer.
FIG. 5 is a flowchart of a method of manufacturing the silicon nitride substrate with reduced warpage.

### [Best Mode]

The aforementioned objects, features, and advantages will be described in detail below with reference to the accompanying drawings, and accordingly, those skilled in the art to which the present disclosure pertains will be able to easily implement the technical spirit of the present disclosure. In describing the present disclosure, if it is determined that a detailed description of known technologies related to the present disclosure may unnecessarily obscure the subject matter of the present disclosure, the detailed description thereof will be omitted. Hereinafter, preferred embodiments according to the present disclosure will be described in detail with reference to the accompanying drawings. In the drawings, the same reference numerals are used to indicate the same or similar components.

In the following description, when any configuration is described as being disposed "on (or under)" a component or "on an upper portion (or lower portion)" of a component, it may mean not only that any configuration is disposed in direct contact with a top (or bottom) surface of the component, but also that another configuration may be interposed between the component and any configuration disposed on (or under) the component.

In addition, when a component is described as being "connected," "coupled," or "joined" to another component, it should be understood that while the components may be directly connected or joined to each other, other components may be "interposed" between the respective components, or each component may be "connected," "coupled," or "joined" through another component.

In an embodiment of the present disclosure, there is provided a green sheet comprising a silicon nitride sheet layer and a boron nitride sheet layer laminated on one or both surfaces of the silicon nitride sheet layer.

In the present specification, a "green sheet" refers to a laminate sheet in which sheets formed from a ceramic material are laminated by a lamination process. The green sheet is subjected to a sintering process to form a ceramic sintered substrate (referred herein as a silicon nitride substrate) by a sintering process.

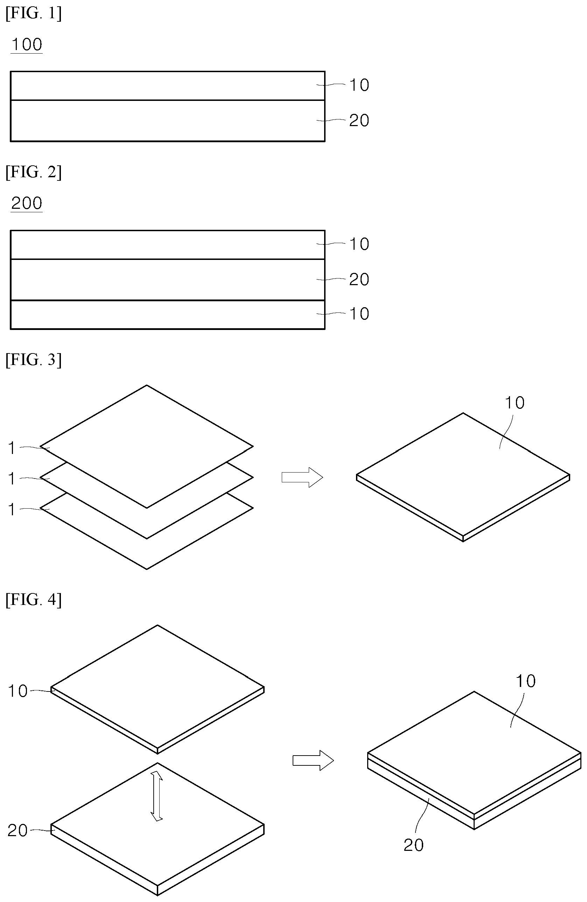

FIG. 1 is a cross-sectional view of a green sheet 100 according to an embodiment.

FIG. 1 shows a green sheet in which a boron nitride sheet layer 10 is formed on one surface of a silicon nitride sheet layer 20.

FIG. 2 is a cross-sectional view of a green sheet 200 according to another embodiment.

FIG. 2 shows a green sheet 200 in which a boron nitride sheet layer 10 is formed on both surfaces of a silicon nitride sheet layer 20.

The silicon nitride sheet layer 20 comprises at least one silicon nitride sheet 1, and when the silicon nitride sheet layer 20 comprise a plurality of silicon nitride sheets 1, the plurality of silicon nitride sheets 1 may be formed by compression.

In the green sheet 100 or 200, warpage may be reduced as the silicon nitride sheet layer 20 undergoes constrained sintering by the boron nitride sheet layer 10 during the sintering process. Accordingly, a silicon nitride substrate with reduced warpage may be manufactured from the green sheet 100 or 200.

Conventionally, a boron nitride powder was applied onto green sheets as a release agent, but in the green sheet 100 or 200, the boron nitride sheet layer 10 is formed instead of applying the boron nitride powder.

The green sheet 100 or 200 may be used to manufacture a ceramic sintered substrate with excellent flatness. To function as a circuit board, a copper thin film is bonded to a ceramic substrate such as a silicon nitride substrate, and a semiconductor device is die-attached onto the copper thin film for operation. Since the semiconductor device operates under high voltage, the heat generation per unit area is extremely high, reaching 30 times that of an electric iron. Due to this rapid heat generation, heat is transferred to the copper thin film and the ceramic substrate. At this time, due to the differences in coefficients of thermal expansion between the copper thin film and the ceramic substrate, delamination may occur at a dissimilar material interface between the copper thin film and the ceramic substrate, which may ultimately lead to a decrease in the reliability of the circuit board. Therefore, the bonding strength at the dissimilar material interface between the copper thin film and the ceramic substrate is a critical physical property that ensures the product reliability of the circuit board. The flatness of the ceramic substrate may significantly affect the bonding strength between the ceramic substrate and the copper thin film. If the flatness of the ceramic substrate falls at or below a predetermined level, the bonding strength between the copper thin film and the ceramic substrate is reduced, ultimately leading to a decrease in the product reliability of the circuit board.

The ceramic substrate (the silicon nitride substrate described later) manufactured by sintering the green sheet 100 or 200 exhibits excellent flatness, and thus a circuit board manufactured by bonding a copper thin film to the ceramic substrate also exhibits excellent flatness.

Conventionally, since the ceramic substrate obtained by sintering a green sheet is thin and shrinkage occurs while a green sheet formed from a ceramic material such as a silicon nitride powder is sintered and transformed into a ceramic substrate, warpage occurs in the thin ceramic substrate after sintering. Such warpage (or a decrease in flatness) causes a decrease in bonding strength during bonding of a copper thin film; therefore, the warpage is required to be controlled at or below a predetermined level. The green sheet 100 or 200 may allow the warpage during sintering to be controlled at or below a predetermined level.

The silicon nitride sheet layer 20 comprises at least one silicon nitride sheet 1, and when the silicon nitride sheet layer 20 comprises a plurality of silicon nitride sheets, the plurality of silicon nitride sheets may be compressed.

The silicon nitride sheet 1 may be formed into a sheet from silicon nitride powder by tape casting. Hereinafter, a process for forming the silicon nitride sheet 1 will be described in detail by way of example.

A slurry may be prepared by mixing silicon nitride powder, ceramic additives, a solvent, and optionally, a dispersant, a binder, and a plasticizer, and the slurry may then be formed into the silicon nitride sheet 1. The solvent is an organic solvent, and for example, at least one selected from ethanol, isopropyl alcohol, toluene, and the like may be used. The ceramic additive may include at least one selected from yttrium oxide (Y₂O₃), magnesium oxide (MgO), zirconium oxide, and the like. The silicon nitride sheet 1, which is form into a sheet, may be obtained by performing tape casting on the slurry, for example. As the dispersant, a commercially available dispersant may be used, for example, BYK-111 manufactured by BYK Chemie, Germany, which is a type of ester-based block copolymer. The binder may include, for example, polyvinyl butyral (PVB). The plasticizer may include, for example, dibutyl phthalate or dioctyl phthalate.

The slurry containing the silicon nitride powder may be aged to remove volatile gases therefrom. During the aging of the slurry, the slurry may be stirred using a stirrer. Aging may be performed for about 24 hours.

The slurry prepared as described above may be formed into a silicon nitride sheet 1 by a tape casting process. Specifically, in the tape casting process, the slurry may be poured onto a blade set at a constant dam height, and may be applied onto a moving substrate film. The formed body of the silicon nitride sheet 1 may be obtained by evaporating the solvent from the slurry applied on a substrate film and then peeling it off. The substrate film may be a stainless steel tape, a glassine paper tape, or a polymer tape such as polyester. For example, the slurry may be poured onto a doctor blade set at a dam height of about 0.3 mm, and the slurry may be applied onto a substrate film moving at a predetermined speed (e.g., 0.1 m/min to 1 m/min). Thereafter, a silicon nitride sheet 1 may be obtained by performing a drying process and a process of peeling off the substrate film.

The tape casting process may be performed at 30°C to 80°C. The silicon nitride sheet 1 formed by the tape casting process may be cut into an appropriate size. For example, the thickness of the silicon nitride sheet 1 may be 0.1 mm to 0.16 mm.

The silicon nitride sheet 1 may have a size of M x N. For example, each of M and N may be 60 mm to 300 mm, but is not particularly limited thereto. That is, each of M and N may be changed according to the size of the silicon nitride substrate to be finally manufactured.

Although the method of manufacturing the silicon nitride sheet 1 has been described by way of example, the present disclosure is not limited thereto, and the sheet may be manufactured according to known methods to achieve desired physical properties or suit an intended use.

FIG. 3 is a schematic diagram showing the silicon nitride sheet layer 20 formed by laminating a plurality of silicon nitride sheets 1 by compression.

A plurality of the silicon nitride sheets 1 manufactured as described above may be laminated. The silicon nitride sheet layer 20 may be formed by performing a lamination process on a laminate of the plurality of silicon nitride sheets 1. For example, three to five silicon nitride sheets 1 may be laminated to form a silicon nitride sheet layer 20. The lamination process may be performed at a pressure of about 10 MPa and a temperature of about 60°C.

The silicon nitride sheet layer 20 may be formed by pressurization. The pressurizing process performed on the silicon nitride sheet layer 20 may utilize a warm isostatic press (WIP). The pressurizing process may be performed at a pressure of about 30 MPa and a temperature of about 70°C. Finally, the thickness TH of the formed silicon nitride sheet layer 20 may be 0.3 mm to 4 mm.

The silicon nitride sheet layer 20 is formed by overlapping the silicon nitride sheets 1 each other, and the size of the silicon nitride sheet layer 20 may also be substantially the same as the size of the silicon nitride sheet 1. In other words, the silicon nitride sheet layer 20 may have a size of M x N. Each of M and N may be 60 mm to 300 mm.

Separately from the silicon nitride sheet layer 20, the boron nitride sheet layer 10 is manufactured. The boron nitride sheet layer 10 may be formed into a sheet from boron nitride powder by tape casting.

The green sheet 100 or 200 is formed a single sheet by compressing the boron nitride sheet layer 10 and the silicon nitride sheet layer 20. As the green sheet 100 or 200 is formed as a single sheet, the bonding force between the boron nitride sheet layer 10 and the silicon nitride sheet layer 20 is enhanced. This can be contrasted with a state in which boron nitride particles, applied onto the green sheet as a release agent or spray-applied in the form of a slurry, are simply placed on the silicon nitride sheet layer 20.

The green sheet 100 or 200 may be manufactured into a substrate by performing a sintering process. In the process of sintering the green sheet 100 or 200, the silicon nitride sheet layer 20 undergoes shrinkage due to densification between particles, whereas the boron nitride sheet layer 10 undergoes less or no shrinkage. Due to the strong bonding force between the boron nitride sheet layer 10 and the silicon nitride sheet layer 20, the boron nitride sheet layer 10 acts as a support against the shrinkage of the silicon nitride sheet layer 20. As a result, the boron nitride sheet layer 10 compressed onto the silicon nitride sheet layer 20, acts as a constraint force during the shrinkage of the silicon nitride sheet layer 20, such that a uniform shrinkage force is applied across the entire silicon nitride substrate being manufactured, thereby reducing warpage of the sintered body after sintering.

In the silicon nitride substrate obtained by sintering the green sheet 100 or 200, since the silicon nitride sheet layer 20 undergoes more shrinkage due to densification than the boron nitride sheet layer 10, one surface of the silicon nitride sheet layer 20 may be smaller than that of the boron nitride sheet layer 10.

In an embodiment, the boron nitride sheet layer 10 may comprise a boron nitride sheet having a thickness of 10 µm to 20 µm. The green sheet 100 or 200 comprise the boron nitride sheet layer 10 with a thickness within the above numerical range, thereby allowing the silicon nitride sheet layer 20 to form a suitably densified sintered body while appropriately applying a constraint force on the silicon nitride sheet layer 20 during sintering.

In an embodiment, the silicon nitride sheet layer 20 may be formed using a single boron nitride sheet formed into a sheet to manufacture the green sheet 100 or 200.

The boron nitride sheet may be formed in a manner similar to the tape casting method used to form the silicon nitride sheet 1 from silicon nitride powder. For example, after preparing a slurry containing boron nitride powder instead of silicon nitride, the slurry may be applied onto a substrate film, and then the solvent is volatilized from the slurry to obtain a formed body of the boron nitride sheet. Hereinafter, a process of forming the boron nitride sheet will be described in detail by way of example.

A slurry may be prepared by mixing boron nitride powder, a binder, a solvent, and optionally, a dispersant and a plasticizer, and the like, and then the boron nitride sheet may be formed by forming the slurry. In an embodiment, the slurry may include 100 parts by weight of boron nitride powder, 0.5 to 3 parts by weight of a dispersant, 5 to 20 parts by weight of an organic binder, 2 to 8 parts by weight of a plasticizer, and 100 to 200 parts by weight of an organic solvent. For example, a boron nitride sheet formed into a sheet may be obtained by performing tape casting on the slurry.

The boron nitride sheet layer 10 may be biaxially oriented. As previously described, to form the boron nitride sheet layer 10, a boron nitride sheet is first formed and then compressed with the silicon nitride sheet layer 20 to form the boron nitride sheet layer 10. As described above, the boron nitride sheet layer 10 may be formed from a pre-manufactured boron nitride sheet and may be biaxially oriented. Since the boron nitride particles used in manufacturing the boron nitride sheet may be, for example, non-spherical particles having an aspect ratio, specifically in a flake shape, they may be biaxially oriented during sheet formation through a process such as tape casting. This can be contrasted with a situation in which boron nitride particles, applied onto the green sheet as a release agent or spray-applied in the form of a slurry, are formed with random orientation. In the biaxially oriented boron nitride sheet layer 10, for example, elongated flake-shaped powders are arranged to be connected to one another, that is, oriented, so that the powders exhibit strong bonding and uniform heat may be transferred to the silicon nitride sheet layer 20. As described above, the resulting green sheet 100 or 200 may exhibit improvements in all physical properties, including warpage, as heat transfer becomes more uniform.

FIG. 4 is a schematic diagram showing a green sheet 100 formed by laminating the boron nitride sheet layer 10 and the silicon nitride sheet layer 20.

The green sheet 100 or 200 may be formed by laminating the boron nitride sheet layer 10, obtained as described above, onto at least one surface of the silicon nitride sheet layer 20, followed by compression and bonding. The process of laminating and compressing the boron nitride sheet layer 10 onto the silicon nitride sheet layer 20 may, for example, be performed using an isostatic hydraulic press.

In an embodiment of the present disclosure,
there is provided a method of manufacturing a silicon nitride substrate with reduced warpage, the method comprising:
interposing at least one green sheet between an upper plate and a lower plate;
performing a debinding process on the green sheet;
performing a sintering process on the green sheet; and
obtaining a silicon nitride substrate from the green sheet.

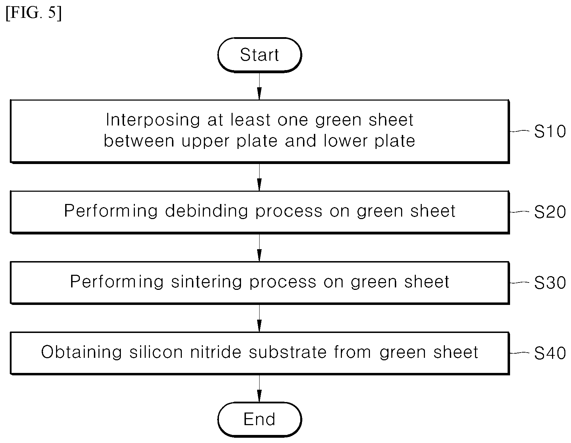

FIG. 5 is a flowchart of a method of manufacturing a silicon nitride substrate with reduced warpage. Referring to FIG. 5, the method of manufacturing a silicon nitride substrate with reduced warpage may include: interposing at least one green sheet 100 or 200 between an upper plate and a lower plate (S10); performing a debinding process on the green sheet 100 or 200 (S20); performing a sintering process on the green sheet 100 or 200 (S30); and obtaining a silicon nitride substrate from the green sheet 100 or 200 (S40).

Although only one green sheet 100 or 200 may be interposed between the upper plate and the lower plate, a laminate structure may be formed by laminating a plurality of green sheets 100 or 200 so that sintering may be performed simultaneously on the plurality of green sheets 100 or 200. The laminate structure may be formed by simply stacking the plurality of green sheets 100 or 200 as they are, without performing an additional compressing process on a laminate structure formed by laminating a plurality of green sheets 100 or 200. By forming such a laminate structure and simultaneously sintering the plurality of green sheets 100 or 200, a plurality of silicon nitride substrates may be manufactured in a single process. The boron nitride sheet layer 10 in the green sheets 100 or 200 prevents aggregation between the plurality of silicon nitride substrates after sintering.

The manufactured silicon nitride substrate may be formed in a state in which the boron nitride sheet layer 10 is compressed onto the silicon nitride sheet layer 20.

As used herein, the "silicon nitride substrate" refers to a substrate comprising a sintered silicon nitride sheet layer, and may also comprise the sintered boron nitride sheet layer.

The upper plate and the lower plate may comprise boron nitride. For example, the upper plate and the lower plate may be boron nitride plates.

As described above, one or a plurality of green sheets 100 or 200 may be interposed between the upper plate and the lower plate, and in an embodiment, a plurality of the green sheets 100 or 200 may be stacked and interposed between the upper plate and the lower plate. For example, 5 to 20 green sheets 100 or 200 may be interposed between the upper plate and the lower plate.

A debinding process (Binder Burn Out, B.B.O.) may be performed on the green sheet 100 or 200 prepared as described above or on a laminate structure including the same. Accordingly, all organic substances such as a binder, a dispersant, and a plasticizer in the green sheet 100 or 200 may be thermally decomposed and removed. In an embodiment, the debinding process may be performed under atmospheric pressure at a predetermined temperature for about 30 hours to 100 hours. For example, the debinding process may be performed under atmosphere (air). For example, the debinding process may be performed in an atmospheric furnace (AF) at a temperature of about 600°C for about 30 hours.

A sintering process may be performed on the debinded green sheet 100 or 200, or the laminate structure including the same. Following the debinding process, the green sheet 100 or 200, or the laminate structure including the same may be provided in a crucible. Bedding powder may be placed in the crucible such that the green sheet 100 or 200, or the laminate structure including the same may be embedded in the bedding powder. The bedding powder may include boron nitride powder, silicon nitride powder, or a mixture thereof. When the bedding powder includes a mixture of boron nitride powder and silicon nitride powder, the boron nitride powder and the silicon nitride powder may be mixed in a ratio of 1:1.

A crucible may be heated to perform a sintering process on the green sheet 100 or 200, or on a laminate structure including the same. Therefore, the green sheet 100 or 200 undergo constrained sintering to form a silicon nitride substrate.

The sintering process may include:
raising a temperature;
maintaining a predetermined temperature; and
cooling the green sheet.

In an embodiment, the sintering process may be performed by raising a temperature to 1,700°C to 2,000°C and maintaining the temperature for 6 to 12 hours. For example, in the sintering process, a temperature may be raised to about 1,900°C and then maintained for about 6 hours. Subsequently, the cooling step may be performed by leaving the laminate structure, without separately performing a process of controlling a cooling temperature or a cooling rate. For example, in the cooling step, the green sheet 100 or 200, or a laminate structure including the same, may be left in a sintering furnace to allow for quenching.

In the method of manufacturing a silicon nitride substrate with reduced warpage, a green sheet 100 or 200, in which a boron nitride sheet layer 10 is attached to a silicon nitride sheet layer 20, are sintered, such that the boron nitride sheet layer 10 causes the silicon nitride sheet layer 20 to undergo constrained sintering. Accordingly, since warpage is reduced during manufacture of the silicon nitride substrate, it may not be necessary to additionally control a cooling temperature or a cooling rate during cooling in the sintering process to reduce warpage.

In order to sinter the silicon nitride sheet layer 20, it is required that the sintering temperature be raised and maintained for a predetermined period of time. When the sintering temperature is within the above range, a dense sintered body may be suitably manufactured by allowing appropriate densification through growth and rearrangement of silicon nitride particles while preventing excessive volatilization of sintering additives. However, a process in which the temperature of a large-scale sintering furnace is raised to up to 2,000°C, maintained for a predetermined period of time, and then cooled to recover a sintered body, requires a long processing time. Accordingly, prolonged operation time in the sintering process leads to reduced productivity. While the operation time of the sintering process is determined by factors including a heating rate, a maximum temperature, a holding time, and a cooling time, there are limitations in controlling the heating rate, the maximum temperature, and the holding time in order to achieve the physical properties of a product. Therefore, in order to reduce the sintering process time, it may be advantageous to reduce the cooling time. Conventionally, it has been necessary to control the cooling rate because warpage of the substrate increases when cooling is performed too rapidly over a short period of time. However, in the method of manufacturing a silicon nitride substrate with reduced warpage, it is not necessary to intentionally slow the cooling rate. Rather, a sintered body with controlled warpage of the substrate may be obtained even when cooling is performed at the maximum possible rate, thereby reducing the sintering process time and improving productivity.

The sintering process may be performed in a nitrogen atmosphere. After sintering the green sheet 100 or 200, or a laminate structure including the same, silicon nitride substrates derived from the individual green sheet 100 or 200 may be obtained.

The layer derived from the silicon nitride sheet layer 20 in the silicon nitride substrate may have a size of M x N and may have a smaller size than the layer derived from the boron nitride sheet layer 10. For example, each of M and N may be 40 mm to 200 mm. The size of the layer derived from the silicon nitride sheet layer 20 in the silicon nitride substrate may be reduced from the original size of the green sheet 100 or 200 due to shrinkage during the sintering process.

A silicon nitride substrate manufactured by the method of manufacturing the silicon nitride substrate with reduced warpage may exhibit excellent flatness because warpage is reduced during the manufacturing process.

In an embodiment, a silicon nitride substrate manufactured by the method of manufacturing the silicon nitride substrate with reduced warpage may achieve a flatness with a calculated value of ΔZ/L (mm/mm) of 0.002 or less, where ΔZ/L is a ratio of ΔZ to L, L is a diagonal length (mm) of the silicon nitride substrate manufactured in a rectangular shape, measured by scanning with a non-contact three-dimensional measuring instrument, and ΔZ is a difference (mm) between a lowest point and a highest point on one surface of the silicon nitride substrate, measured in a vertical direction from a sample holder.

The silicon nitride substrate may be applied as an insulating ceramic substrate used for circuit boards. In an embodiment, the silicon nitride substrate may be applied as an insulating substrate for a power module of an electric vehicle.

In an embodiment of the present disclosure, there is provided a silicon nitride substrate manufactured by the method of manufacturing the silicon nitride substrate with reduced warpage, wherein a calculated value of ΔZ/L (mm/mm) is 0.002 or less, where ΔZ/L is a ratio of ΔZ to L, L is a diagonal length (mm) of the silicon nitride substrate manufactured in a rectangular shape, measured by scanning with a non-contact three-dimensional measuring instrument, and ΔZ is a difference (mm) between a lowest point and a highest point on one surface of the silicon nitride substrate, measured in a vertical direction from a sample holder. As the boron nitride sheet layer included in the green sheet is sintered, the silicon nitride substrate comprises a sintered boron nitride sheet layer, and the sintered boron nitride sheet layer may have a thickness of 10 µm to 20 µm. The sintered boron nitride sheet layer may comprise a boron nitride sheet having a thickness of 10 µm to 20 µm.

In an embodiment of the present disclosure, there is provided a silicon nitride substrate formed by constrained sintering of a compressed silicon nitride sheet layer 20 and a boron nitride sheet layer. The silicon nitride substrate may be manufactured by the method of manufacturing a silicon nitride substrate with reduced warpage described above. As the boron nitride sheet layer included in the green sheet is sintered, the silicon nitride substrate comprises a sintered boron nitride sheet layer, and the sintered boron nitride sheet layer may have a thickness of 10 µm to 20 µm. The sintered boron nitride sheet layer may comprise a boron nitride sheet having a thickness of 10 µm to 20 µm.

Hereinafter, Examples and Comparative Examples of the present disclosure will be described. The following Examples are merely examples of the present disclosure, and the present disclosure is not limited to the following Examples.

### (Examples)

### Example 1

A boron nitride sheet having a thickness of 15 µm was laminated on one surface of a silicon nitride sheet, and the boron nitride sheet and the silicon nitride sheet were compressed using an isostatic hydraulic press at 70°C and 30 MPa for 15 minutes. Ten compressed green sheets were laminated and loaded into a boron nitride crucible, followed by maintaining at 1,930°C for 6 hours and cooling, after which the furnace was opened at 150°C to obtain a sintered substrate. The total time required for the sintering process was 24 hours. Ten silicon nitride substrates were manufactured therefrom.

### Example 2

A boron nitride sheet having a thickness of 15 µm was laminated on one surface of a silicon nitride sheet, and the boron nitride sheet and the silicon nitride sheet were compressed using an isostatic hydraulic press at 70°C and 30 MPa for 15 minutes. Ten compressed green sheets were laminated and loaded into a boron nitride crucible, and maintained at 1,930°C for 6 hours. The structure was then cooled through a first cooling zone at a rate of 10°C/min and maintained at 1,600°C for 1 hour, then cooled through a second cooling zone at a rate of 3.7°C/min, and furnace-cooled at 800°C or less, after which the furnace was opened at 150°C to obtain a sintered substrate. The total time required for the sintering process was 26 hours. Ten silicon nitride substrates were manufactured therefrom.

### Example 3

A boron nitride sheet having a thickness of 15 µm was laminated on one surface of a silicon nitride sheet, and the boron nitride sheet and the silicon nitride sheet were compressed using an isostatic hydraulic press at 70°C and 30 MPa for 15 minutes. Ten compressed green sheets were laminated, loaded into a boron nitride crucible, and maintained at 1,930°C for 6 hours. The structure was then furnace-cooled, rapidly cooled with a large amount of nitrogen injected at 800°C or less, and the furnace was opened at 150°C to obtain a sintered substrate. The total time required for the sintering process was 22 hours. Ten silicon nitride substrates were manufactured therefrom.

### Comparative Example 1

A boron nitride slurry was spray-applied onto both surfaces of a silicon nitride sheet, and the solvent was evaporated to manufacture a silicon nitride sheet with boron nitride particles applied to a thickness of 10 µm. Ten manufactured silicon nitride sheets were laminated and loaded into a boron nitride crucible, maintained at 1,930°C for 6 hours, then furnace-cooled, after which the furnace was opened at 150°C to obtain a sintered substrate. The total time required for the sintering process was 24 hours. Ten silicon nitride substrates were manufactured therefrom.

### Comparative Example 2

A boron nitride slurry was spray-applied onto both surfaces of a silicon nitride sheet, and the solvent was evaporated to manufacture a silicon nitride sheet with boron nitride particles applied to a thickness of 10 µm. Ten manufactured silicon nitride sheets were laminated, loaded into a boron nitride crucible, and maintained at 1,930°C for 6 hours. The structure was then cooled through a first cooling zone at a rate of 10°C/min and maintained at 1,600°C for 1 hour, then cooled through a second cooling zone at a rate of 3.7°C/min, and furnace-cooled at 800°C or less, after which the furnace was opened at 150°C to obtain a sintered substrate. The total time required for the sintering process was 26 hours. Ten silicon nitride substrates were manufactured therefrom.

### (Experimental Example)

Thermal conductivity and flexural strength were measured using the instruments described below.
- Thermal conductivity: Thermal diffusivity meter, LFA 467 HyperFlash _NETZSCH
- Flexural strength measurement: Universal Testing Machine (UTM) _Instron

### Warpage Measurement

Warpage was measured in a non-contact manner. A silicon nitride substrate (140 mm x 190 mm x 0.32 mm) manufactured in a rectangular shape was scanned in a diagonal direction of the silicon nitride substrate with a non-contact three-dimensional measuring instrument. ΔZ/L (mm/mm) was defined as the warpage value, where L is a scanned diagonal length (mm), and ΔZ is a difference (mm) between a lowest point and a highest point on one surface of the silicon nitride substrate in a vertical direction from a sample holder.

The evaluation results of Examples 1-3 and Comparative Examples 1-2 are shown in Table 1.

**[Table 1]**

| | Comp. Example 1 | Comp. Example 2 | Example 1 | Example 2 | Example 3 |
|---|---|---|---|---|---|
| Thermal conductivity (w/M·K) | 78 | 79 | 82 | 84 | 81 |
| Flexural strength (MPa) | 850 | 860 | 860 | 850 | 870 |
| Amount of warpage (µm/mm) | 7~10 | 4~8 | <2 | <2 | <2 |
| Sintering process time (hr) | 24 | 26 | 24 | 26 | 22 |

Comparing the results of Examples 1-3 with those of Comparative Examples 1 and 2, it can be confirmed that Examples 1-3 exhibit excellent thermal conductivity and flexural strength despite manufacturing the silicon nitride substrates with similar sintering process times. In particular, a flatness of 2 µm /mm or less could be achieved. It was confirmed that Comparative Examples 1-2 showed inferior results compared to Examples 1-3 because they did not form a boron nitride sheet layer, but instead merely applied boron nitride particles. Specifically, although Comparative Example 2 attempted to improve warpage characteristics by controlling the cooling rate and showed some improvement over Comparative Example 1, it still did not reach the performance of Examples 1-3.

As described above, the present disclosure has been described with reference to the embodiments, but the present disclosure is not limited by the embodiments disclosed in the present specification. It is obvious that various modifications can be made by those skilled in the art within the scope of the technical spirit of the present disclosure. Furthermore, even if the operational effects according to the configuration of the present disclosure were not explicitly described while describing the embodiments of the present disclosure, it is natural that effects predictable from the corresponding configurations should also be recognized.

### [Description of Reference Numerals]

1: Silicon nitride sheet
10: Boron nitride sheet layer
20: Silicon nitride sheet layer
100, 200: Green sheet

## Claims

1. A green sheet comprising a silicon nitride sheet layer and a boron nitride sheet layer laminated on one or both surfaces of the silicon nitride sheet layer.

2. The green sheet according to claim 1, wherein the silicon nitride sheet layer and the boron nitride sheet layer are compressed.

3. The green sheet according to claim 1, wherein the silicon nitride sheet layer comprises at least one silicon nitride sheet, and when the silicon nitride sheet layer comprises a plurality of silicon nitride sheets, the plurality of silicon nitride sheets are compressed.

4. The green sheet according to claim 1, wherein the boron nitride sheet layer comprises a biaxially oriented boron nitride sheet.

5. The green sheet according to claim 1, wherein the boron nitride sheet layer comprises a boron nitride sheet having a thickness of 10 µm to 20 µm.

6. A method of manufacturing a silicon nitride substrate with reduced warpage, the method comprising:
interposing at least one green sheet according to claim 1 between an upper plate and a lower plate;
performing a debinding process on the green sheet;
performing a sintering process on the green sheet; and
obtaining a silicon nitride substrate from the green sheet.

7. The method according to claim 6, wherein the green sheet is formed by compressing the silicon nitride sheet layer and the boron nitride sheet layer.

8. The method according to claim 6, wherein the silicon nitride sheet layer in the green sheet is subjected to constrained sintering by the boron nitride sheet layer.

9. The method according to claim 6, wherein the number of green sheets interposed between the upper plate and the lower plate is one or plural.

10. The method according to claim 6, wherein the silicon nitride sheet layer comprises at least one silicon nitride sheet, and when the silicon nitride sheet layer comprises a plurality of silicon nitride sheets, the plurality of silicon nitride sheets are compressed.

11. The method according to claim 9, wherein the boron nitride sheet layer is formed by compressing a plurality of boron nitride sheets, each having a thickness of 10 µm to 20 µm.

12. The method according to claim 6, wherein the silicon nitride sheet is formed into a sheet from silicon nitride powder by tape casting.

13. The method according to claim 6, wherein the sintering process comprises:
raising a temperature;
maintaining a predetermined temperature; and
cooling the green sheet.

14. The method according to claim 13, wherein the cooling is performed by leaving the green sheet, without separately performing a process of controlling a cooling temperature or a cooling rate.

15. A silicon nitride substrate manufactured by the method of manufacturing a silicon nitride substrate with reduced warpage according to claim 6, wherein a calculated value of ΔZ/L (mm/mm) is 0.002 or less, where ΔZ/L is a ratio of ΔZ to L, L is a diagonal length (mm) of the silicon nitride substrate manufactured in a rectangular shape, measured by scanning with a non-contact three-dimensional measuring instrument, and ΔZ is a difference (mm) between a lowest point and a highest point on one surface of the silicon nitride substrate, measured in a vertical direction from a sample holder.

16. The silicon nitride substrate according to claim 15, wherein the silicon nitride substrate comprises a sintered silicon nitride sheet layer and a sintered boron nitride sheet layer, wherein the sintered boron nitride sheet layer has a thickness of 10 µm to 20 µm.

17. A silicon nitride substrate formed by constrained sintering of a compressed silicon nitride sheet layer and boron nitride sheet layer.

18. The silicon nitride substrate according to claim 17, wherein the silicon nitride substrate comprises a sintered boron nitride sheet layer, wherein the sintered boron nitride sheet layer has a thickness of 10 µm to 20 µm.
